# EUROPÄISCHE PATENTANMELDUNG

(11) **EP 4 725 288 A1**
(43) Veröffentlichungstag der Anmeldung: **15.04.2026**
(21) Anmeldenummer: 25203717.1
(22) Anmeldetag: 22.09.2025
(51) Int. Cl.: A01D 41/14, A01D 43/08, A01D 45/02

(54) **KLAPPBARER ERNTEVORSATZ ZUR REIHENUNABHÄNGIGEN ERNTE VON MAIS**

(30) Priorität: 09.10.2024 DE 102024129135
(71) Anmelder: Maschinenfabrik Bernard Krone GmbH & Co. KG, 48480 Spelle (DE)
(72) Erfinder: Mählmann-Dunker, Hannes, 27251 Neuenkirchen (DE); Bolsmann, Martin, 49832 Andervenne (DE); Oskamp, Tobias, 48607 Ochtrup (DE); Ahlmer, Frank, 49492 Westerkappeln (DE); Ester, Markus, 49832 Beesten (DE); Büchter, Steven, 49509 Recke (DE)

(57) **Zusammenfassung**

Die vorliegende Erfindung betrifft einen Erntevorsatz (10) zur reihenunabhängigen Ernte von Mais mit einem Feldhäcksler (80). Der Erntevorsatz (10) umfasst zumindest drei Vorsatzsegmente (1, 2, 3, 4) einschließlich eines ersten mittigen Vorsatzsegmentes (1). Die Vorsatzsegmente (1, 2, 3, 4) weisen jeweils ein im Betrieb umlaufendes Förderelement (18) zum Fördern der Maispflanzen in eine Segmentförderrichtung (SR1, SR2, SR3, SR4) zum Einzugsbereich (14) auf. Außerdem weist der Erntevorsatz eine Überführungseinrichtung (20) zur Überführung des Erntevorsatzes (10) von einer Arbeitsstellung (I) in eine Transportstellung (VI) auf. In der Arbeitsstellung (I) schließen die Vorsatzsegmente (1, 2, 3, 4) derart in eine Querrichtung (QR) aneinander an, dass ihre Segmentförderrichtungen (SR1, SR2, SR3, SR4) parallel zu einer Aufstandsebene (AE) und auf den Einzugsbereich (14) ausgerichtet sind. In der Transportstellung (VI) ist zumindest eines der Vorsatzsegmente (1, 2, 3, 4) derart angeordnet, dass die Segmentförderrichtung (SR1, SR2, SR3, SR4) des Vorsatzsegmentes (1, 2, 3, 4) angewinkelt zur Aufstandsebene (AE) ausgerichtet ist. Erfindungsgemäß hat die Überführungseinrichtung (20) eine Ausbildung zur Überführung des Erntevorsatzes (10) derart, dass die Segmentförderrichtung (SR1) des erstes Vorsatzsegmentes (1) in der Transportstellung (VI) des Erntevorsatzes (10) angewinkelt zur Aufstandsebene (AE) ausgerichtet ist.

## Beschreibung

Die Erfindung betrifft einen Erntevorsatz zur reihenunabhängigen Ernte von Mais. Der Erntevorsatz umfasst eine zur Kopplung mit einem Feldhäcksler ausgebildete Rahmenvorrichtung und zumindest drei Vorsatzsegmente. Die zumindest drei Vorsatzsegmente weisen jeweils zumindest ein Schneidelement und zumindest ein Förderelement auf. Das zumindest eine Schneidelement läuft im Betrieb des Erntevorsatzes um und dient zum Schneiden von Maispflanzen. Das zumindest eine Förderelement läuft im Betrieb des Erntevorsatzes um und dient zum Fördern der Maispflanzen in eine Segmentförderrichtung des jeweiligen Vorsatzsegmentes. Der Erntevorsatz weist eine Überführungseinrichtung zur Überführung des Erntevorsatzes von einer Arbeitsstellung in eine Transportstellung auf. In der Arbeitsstellung schließen die Vorsatzsegmente derart in eine zur Fahrtrichtung rechtwinklige Querrichtung aneinander an, dass ihre Segmentförderrichtungen parallel zu einer Aufstandsebene und auf einen Einzugsbereich des Erntevorsatzes ausgerichtet sind. Den Einzugsbereich schneidet eine zur Querrichtung rechtwinklige Längsmittelebene. Aus dem Einzugsbereich sind die Maispflanzen vom Feldhäcksler zumindest anteilig entgegen der Fahrtrichtung einzuziehen. In der Transportstellung ist zumindest eines der Vorsatzsegmente derart angeordnet, dass seine Segmentförderrichtung angewinkelt zur Aufstandsebene ausgerichtet ist. Die zumindest drei Vorsatzsegmente umfassen zumindest ein erstes Vorsatzsegment, das sich in der Arbeitsstellung in oder durch den Einzugsbereich erstreckt.

Derartige Erntevorsätze sind bekannt. Ihre Leistungsfähigkeit wird anhand der abzuerntenden Ackerfläche oder der zu erntenden Masse an Mais pro Zeit bewertet. Damit möglichst viel Mais dann geerntet werden kann, wenn sein Reifegrad optimal ist, ist eine hohe Leistungsfähigkeit von Vorteil. Die Leistungsfähigkeit ist beispielsweise mit einer Erstreckung der Vorsatzsegmente des in der Arbeitsstellung angeordneten Erntevorsatzes in die Querrichtung, also der Arbeitsbreite, zu vergrößern. Neben der möglichst großen Leistungsfähigkeit ist beabsichtigt, dass der Erntevorsatz in der Transportstellung eine möglichst geringe Erstreckung in die Querrichtung, also Transportbreite, hat, um, möglichst ohne Sondergenehmigung, ohne Demontage vom Feldhäcksler über öffentliche Straßen transportabel zu sein. Es sind bisher beispielsweise keine Erntevorsätze zur reihenunabhängigen Ernte von Mais bekannt, deren Arbeitsbreite 9 m überschreitet und deren Transportbreite 3 m nicht überschreitet.

Ein erster bekannter Erntevorsatz umfasst im Gegensatz zum gattungsgemäßen Erntevorsatz nur zwei Vorsatzsegmente, die sich in der Arbeitsstellung des Erntevorsatzes jeweils von einer Seite in den Einzugsbereich erstrecken und in der Transportstellung des Erntevorsatzes jeweils derart angeordnet sind, dass ihre Segmentförderrichtungen angewinkelt zur Aufstandsebene ausgerichtet sind. Ein zweiter bekannter Erntevorsatz umfasst drei Vorsatzsegmente, wovon nur ein erstes Vorsatzsegment sich in der Arbeitsstellung des Erntevorsatzes, in diesem Fall von beiden Seiten, in den Einzugsbereich erstreckt, wobei die beiden weiteren Vorsatzsegmente in der Transportstellung derart angeordnet sind, dass ihre Segmentförderrichtungen ebenso wie die Segmentförderrichtung des ersten Vorsatzsegmentes parallel zur Aufstandsebene ausgerichtet sind. Sowohl der erste bekannte Erntevorsatz als auch der zweite bekannte Erntevorsatz weist als Förderelemente Förderketten auf, die im Betrieb je um zwei sich drehende Umlenkelemente des jeweiligen Vorsatzsegmentes umlaufen. Ein dritter bekannter Erntevorsatz umfasst fünf Vorsatzsegmente, wovon nur ein erstes Vorsatzsegment sich in der Arbeitsstellung des Erntevorsatzes, auch in diesem Fall von beiden Seiten, in den Einzugsbereich erstreckt, wobei die vier weiteren Vorsatzsegmente in der Transportstellung derart angeordnet sind, dass ihre Segmentförderrichtungen angewinkelt zur Aufstandsebene ausgerichtet sind.

Aufgabe der vorliegenden Erfindung ist die Bereitstellung eines gattungsgemäßen Erntevorsatzes zur reihenunabhängigen Ernte von Mais, mit dem ein verbessertes Verhältnis von der Arbeitsbreite zur Transportbreite größtmöglicher Zuverlässigkeit zu erreichen ist. Ferner ist Aufgabe der vorliegenden Erfindung die Bereitstellung eines verbesserten Überführungsverfahrens zur Überführung des Erntevorsatzes sowie die Bereitstellung eines Feldhäckslersystems umfassend den Erntevorsatz.

Dafür wird ein Erntevorsatz zur reihenunabhängigen Ernte von Mais geschaffen, umfassend
- eine zur Kopplung mit einem Feldhäcksler ausgebildete Rahmenvorrichtung, zumindest drei Vorsatzsegmente, die jeweils zumindest ein im Betrieb umlaufendes Schneidelement zum Schneiden von Maispflanzen und zumindest ein im Betrieb umlaufendes Förderelement zum Fördern der Maispflanzen in eine Segmentförderrichtung aufweisen, und
- eine Überführungseinrichtung zur Überführung des Erntevorsatzes von einer Arbeitsstellung, in der die Vorsatzsegmente derart in eine zur Fahrtrichtung rechtwinklige Querrichtung aneinander anschließen, dass ihre Segmentförderrichtungen parallel zu einer Aufstandsebene und auf einen Einzugsbereich ausgerichtet sind, den eine zur Querrichtung rechtwinklige Längsmittelebene schneidet und aus dem die Maispflanzen vom Feldhäcksler zumindest anteilig entgegen der Fahrtrichtung einzuziehen sind, in eine Transportstellung, in der zumindest eines der Vorsatzsegmente derart angeordnet ist, dass seine Segmentförderrichtung angewinkelt zur Aufstandsebene ausgerichtet ist,
wobei die zumindest drei Vorsatzsegmente zumindest ein erstes Vorsatzsegment umfassen, das sich in der Arbeitsstellung in oder durch den Einzugsbereich erstreckt.

Erfindungsgemäß wird die Aufgabe durch eine Ausbildung der Überführungseinrichtung zu einer derartigen Überführung des Erntevorsatzes gelöst, dass die Segmentförderrichtung des ersten Vorsatzsegmentes in der Transportstellung des Erntevorsatzes angewinkelt zur Aufstandsebene ausgerichtet ist. Der erfindungsgemäße Erntevorsatz weist also zumindest drei Vorsatzsegmente auf, wovon das zumindest eine, das sich in der Arbeitsstellung in oder durch den Einzugsbereich erstreckt und insbesondere zwischen den zumindest zwei weiteren beiden Vorsatzsegmenten angeordnet ist, bei der Überführung des Erntevorsatzes von der Arbeitsstellung in die Transportstellung zumindest anteilig um eine gedachte Schwenkachse verschwenkt wird, die nicht-orthogonal zur Aufstandsebene angeordnet ist. Damit wird die Möglichkeit zu einer besonders platzsparenden Anordnung der Vorsatzsegmente in der Transportstellung des Erntevorsatzes geschaffen.

Erntevorsätze zur reihenunabhängigen Ernte von Mais zeichnen sich dadurch aus, dass sie unabhängig davon einzusetzen sind, ob die Fahrtrichtung mit der Richtung, in der sich die Reihen der zu erntenden Maispflanzen erstrecken, übereinstimmen. Außerdem sind Erntevorsätze zur reihenunabhängigen Ernte von Mais unabhängig davon einzusetzen, welchen Abstand die Reihen voneinander haben. Erst die Segmentierung des Erntevorsatzes in relativ zueinander zur Überführung des Erntevorsatzes von der Arbeitsstellung in die Transportstellung bewegliche Vorsatzsegmente ermöglicht eine Arbeitsbreite, die die auf öffentlichen Straßen zulässige Transportbreite übersteigt.

Jedes Vorsatzsegment zeichnet sich durch die Funktionen Schneiden und Fördern aus. Im Betrieb laufen sowohl die Schneidelemente als auch die Förderelemente der Vorsatzsegmente um Achsen um, die zur Aufstandsebene angewinkelt ausgerichtet sind.

Jedes Vorsatzsegment zeichnet sich durch eine konstruktiv festgelegte Segmentförderrichtung aus, die insbesondere tangential zur zumindest einen Achse ausgerichtet ist, um die das jeweilige Förderelement im Betrieb umläuft. Die Segmentförderrichtung ist bevorzugt in Bezug auf einen Segmentrahmen des jeweiligen Vorsatzsegmentes, der in der Arbeitsstellung insbesondere ortsfest relativ zur Rahmenvorrichtung angeordnet ist, ortsfest. Das bedeutet, dass mit einer Veränderung der Orientierung oder Ausrichtung eines Vorsatzsegmentes notwendigerweise in gleichem Maße die Orientierung bzw. Ausrichtung von dessen Segmentförderrichtung geändert wird. Die Segmentförderung beschreibt global die Richtung, in die Maispflanzen vom jeweiligen Vorsatzsegment im Betrieb gefördert werden. Die Segmentförderrichtung ist insbesondere die Richtung, in die eine einenends des Vorsatzsegmentes von dem zumindest einen Förderelement aufgenommene Maispflanze insgesamt hiervon fortbewegt wurde, wenn sie anderenends von dem Förderelement übergeben wird. Das gilt unabhängig davon, ob das eine oder die mehreren Förderelemente des Vorsatzsegmentes die Maispflanzen lokal oder bereichsweise, beispielsweise bei mehreren im Betrieb um benachbarte Drehachsen rotierenden Förderelementen, in von der Segmentförderrichtung abweichende Richtungen fördern. Die Segmentförderrichtung bleibt auch dann eine Eigenschaft der Vorsatzsegmente, wenn diese, etwa in der Transportstellung, praktisch nicht oder nicht sinnvoll zum Fördern einzusetzen sind.

Die Arbeitsbreite und die Transportbreite des Erntevorsatzes werden jeweils in die Querrichtung gemessen. Die Querrichtung ist ebenso wie die Fahrtrichtung parallel zur Aufstandsebene ausgerichtet. Die Aufstandsebene repräsentiert idealisiert die Bodenoberfläche, von der die zu schneidenden und zu fördernden Maispflanzen aufwachsen. Insbesondere berührt der Erntevorsatz und/oder der Feldhäcksler im Betrieb die Aufstandsebene, bevorzugt mit einem Fahrwerk. In der Arbeitsstellung sind die Vorsatzsegmente besonders bevorzugt derart angeordnet, dass die Segmentförderrichtungen parallel zur Aufstandsebene, besonders bevorzugt parallel zur Querrichtung ausgerichtet sind.

Der Einzugsbereich ist ortsfest durch den Erntevorsatz ausgebildet. Der Einzugsbereich ist insbesondere mittig, insbesondere zwischen innersten Förderelementen, und/oder nahe und/oder innerhalb der Rahmenvorrichtung angeordnet. Der Einzugsbereich ist derart zu verstehen, dass im zweckgemäßen Einsatz des Erntevorsatzes die geschnittenen und geförderten Maispflanzen aus dem Einzugsbereich von einer Einzugseinrichtung des Feldhäckslers von ihm eingezogen werden. Die Erstreckung des ersten Vorsatzsegmentes in den Einzugsbereich meint, dass die Maispflanzen von dem zumindest einen Förderelement des ersten Vorsatzsegmentes im Betrieb im Einzugsbereich an die Einzugseinrichtung übergeben werden.

Die Vorsatzsegmente schließen sich in der Arbeitsstellung des Erntevorsatzes zumindest teilweise derart in die Querrichtung aneinander an, dass eines der Vorsatzsegmente Maispflanzen an ein benachbartes der Vorsatzsegmente zur weiteren Förderung übergibt. Das Anschließen schließt nicht aus, dass die Segmentförderrichtungen dieser Vorsatzsegmente zueinander versetzt oder angewinkelt sind. Das erste Vorsatzsegment erstreckt sich in einer ersten bevorzugten Variante des Erntevorsatzes einseitig in den Einzugsbereich. Das bedeutet insbesondere, dass die Längsmittelebene das erste Vorsatzsegment nicht schneidet. In einer zweiten bevorzugten Variante des Erntevorsatzes erstreckt sich das erste Vorsatzsegment durch den Einzugsbereich hindurch und wird von der Längsmittelebene insbesondere mittig geschnitten. Bevorzugt ist der Erntevorsatz zumindest im Wesentlichen spiegelsymmetrisch zur Längsmittelebene ausgebildet. Unbeachtet bleiben dabei insbesondere Nebenaggregate oder Elemente zur Übertragung von Leistungen vom Feldhäcksler an den Erntevorsatz. In der zweiten bevorzugten Variante ist insbesondere das erste Vorsatzsegment spiegelsymmetrisch zur Längsmittelebene ausgebildet und hat besonders bevorzugt zwei sich entgegengesetzte Segmentförderrichtungen. Die Längsmittelebene erstreckt sich rechtwinklig zur Aufstandsebene und parallel zur Fahrtrichtung.

Vorzugsweise ist die Überführungseinrichtung derart zur Überführung des Erntevorsatzes ausgebildet, dass die Segmentförderrichtung des ersten Vorsatzsegmentes in der Transportstellung um zumindest 60° angewinkelt zur Aufstandsebene ausgerichtet ist. Besonders bevorzugt ist die Segmentförderrichtung des ersten Vorsatzsegmentes in der Transportstellung parallel zur Längsmittelebene ausgerichtet. Durch diese Ausrichtung ist zu erreichen, dass sich das erste Vorsatzsegment in der Transportstellung hauptsächlich vertikal erstreckt und neben sich Raum für die weiteren Vorsatzsegmente freigibt, der sich bis zur Aufstandsebene erstreckt.

Bevorzugt ist die Überführungseinrichtung derart zur Überführung des Erntevorsatzes ausgebildet, dass die Segmentförderrichtung des ersten Vorsatzsegmentes in der Transportstellung von der Aufstandsebene weggerichtet ist. Das gilt insbesondere bei einer derartigen Ausbildung des ersten Vorsatzsegmentes, dass es sich einseitig in den Einzugsbereich erstreckt und genau eine Segmentförderrichtung hat. Die Überführung des Erntevorsatzes schließt in diesem Fall ein Anheben eines in der Arbeitsstellung im Einzugsbereich angeordneten Endes des ersten Vorsatzsegmentes relativ zum gegenüberliegenden, insbesondere äußeren, Ende des Vorsatzsegmentes ein. Das erste Vorsatzsegment wird in der Transportstellung bevorzugt nicht von der Längsmittelebene geschnitten. Durch diese Anordnung des Vorsatzsegmentes in der Transportstellung wird die Möglichkeit zu einer neuartigen, platzsparenden Faltung der Vorsatzsegmente in der Transportstellung geschaffen. Vorzugsweise weist der Erntevorsatz zumindest vier, insbesondere genau vier, Vorsatzsegmente auf.

Vorzugsweise ist die Überführungseinrichtung derart zur Überführung des Erntevorsatzes ausgebildet, dass die Segmentförderrichtungen sämtlicher Vorsatzsegmente in der Transportstellung, bevorzugt um zumindest 60°, angewinkelt zur Aufstandsebene ausgerichtet sind. Insbesondere sind in der Transportstellung die Segmentförderrichtungen sämtlicher Vorsatzsegmente parallel zur Längsmittelebene ausgerichtet. Dabei sind die Segmentförderrichtungen benachbarter Vorsatzsegmente einander insbesondere entgegengerichtet. Auf diese Weise können die Vorsatzsegmente bei im Wesentlichen vertikaler Ausrichtung so ineinander eingreifen, dass sie einen besonders geringen Raumbedarf in die Querrichtung haben.

Bevorzugt weist jedes Vorsatzsegment zumindest ein, insbesondere genau ein, als Förderkette ausgebildetes Förderelement auf. Dieses Förderelement läuft im Betrieb um zumindest zwei insbesondere am Segmentrahmen drehbar gelagerte Umlenkelemente um. Weitere Förderelemente weisen die Vorsatzsegmente bevorzugt nicht auf. Die Förderketten weisen bevorzugt zumindest äußerlich abstehende Förderzähne auf, die zum Greifen und Mitnehmen der abgeschnittenen und zu fördernden Maispflanzen ausgebildet sind. Die Umlenkelemente drehen sich im Betrieb um voneinander beabstandete und zur Aufstandsebene angewinkelte Drehachsen, wobei zumindest ein Umlenkelement pro Vorsatzsegment angetrieben ist. Die Quererstreckung der Förderelemente gleicht bevorzugt zumindest im Wesentlichen der Quererstreckung des Vorsatzsegmentes, das das jeweilige Förderelement umfasst. Besonders bevorzugt sind die Schneidelemente der Vorsatzsegmente als im Betrieb umlaufende Schneidketten ausgebildet. Hierdurch ist die Zuverlässigkeit weiter zu erhöhen und der Bauraumbedarf der Vorsatzsegmente weiter zu verringern.

Bevorzugt ist ein Förderelement des ersten Vorsatzsegmentes zum Fördern von Maispflanzen in die Segmentförderrichtung des ersten Vorsatzsegmentes über einen ersten Segmentförderweg ausgebildet. Weiterhin ist bevorzugt ein Förderelement des zweiten Vorsatzsegmentes zum Fördern von Maispflanzen in die Segmentförderrichtung des zweiten Vorsatzsegmentes über einen zweiten Segmentförderweg ausgebildet. Das zweite Vorsatzsegment schließt sich zumindest in der Arbeitsstellung des Erntevorsatzes an eine von der Längsmittelebene abgewandte Seite des ersten Vorsatzsegmentes an. Der zweite Segmentförderweg ist vorzugsweise länger als der erste Segmentförderweg. Das erlaubt besonders große Arbeitsbreiten, wobei ein Fahrer des Feldhäckslers in der Transportstellung des Erntevorsatzes insbesondere zwischen den äußeren Vorsatzsegmenten hindurchschauen kann.

Das erste Vorsatzsegment ist bevorzugt schwenkbeweglich um eine Überführungssegmentschwenkachse an einem Überführungselement gelagert. Das Überführungselement ist insbesondere schwenkbeweglich um eine Überführungsrahmenschwenkachse relativ zur Rahmenvorrichtung oder an der Rahmenvorrichtung gelagert. Alternativ oder zusätzlich ist das zweite Vorsatzsegment bevorzugt schwenkbeweglich um eine Zwischensegmentschwenkachse am ersten Vorsatzsegment gelagert. Pro Schwenkachse weist der Erntevorsatz bevorzugt zumindest einen insbesondere als Hydraulikzylinder ausgebildeten Aktor auf, um die jeweiligen Schwenkbewegungen auszuführen.

Bevorzugt sind die vorgenannten Achsen folgendermaßen angeordnet. In einer Seitenansicht des zum Einsatz abgesenkten Erntevorsatzes in seiner Arbeitsstellung, in der die Blickrichtung mit der Querrichtung übereinstimmt, sind/ist die Überführungssegmentschwenkachse, die Überführungsrahmenschwenkachse und/oder die Zwischensegmentschwenkachse bevorzugt zur Aufstandsebene angewinkelt, besonders bevorzugt um < 25°. Der Schnittpunkt der Überführungssegmentschwenkachse, der Schnittpunkt der Überführungsrahmenschwenkachse und/oder der Schnittpunkt der Zwischensegmentschwenkachse mit der Aufstandsebene sind/ist bezogen auf die Fahrtrichtung besonders bevorzugt hinter dem Erntevorsatz angeordnet. In einer Frontansicht des zum Einsatz abgesenkten Erntevorsatzes in seiner Arbeitsstellung, in der die Blickrichtung der Fahrtrichtung entgegengesetzt ist, sind/ist die Überführungssegmentschwenkachse und/oder die Überführungsrahmenschwenkachse bevorzugt zur Längsmittelebene angewinkelt, besonders bevorzugt um > 25°. Die Aufstandsebene ist besonders bevorzugt zwischen dem Erntevorsatz und dem Schnittpunkt Überführungssegmentschwenkachse und/oder dem Schnittpunkt der Überführungsrahmenschwenkachse mit der Längsmittelebene angeordnet. In einer Draufsicht des zum Einsatz abgesenkten Erntevorsatzes in seiner Arbeitsstellung, in der die Blickrichtung rechtwinklig zur Aufstandsebene ausgerichtet ist, sind/ist die Überführungssegmentschwenkachse, die Überführungsrahmenschwenkachse und/oder die Zwischensegmentschwenkachse bevorzugt zur Längsmittelebene angewinkelt, besonders bevorzugt um < 25°. Der Schnittpunkt der Überführungssegmentschwenkachse und/oder der Schnittpunkt der Überführungsrahmenschwenkachse mit der Längsmittelebene sind/ist bezogen auf die Fahrtrichtung besonders bevorzugt hinter dem Erntevorsatz angeordnet. Der Schnittpunkt der Zwischensegmentschwenkachse mit der Längsmittelebene ist bezogen auf die Fahrtrichtung besonders bevorzugt vor dem Erntevorsatz angeordnet.

Die erfindungsgemäße Ausbildung des Erntevorsatzes erlaubt eine Erhöhung der Arbeitsbreite von reihenunabhängigen Mais-Erntevorsätzen über die derzeit bekannten Arbeitsbreiten hinaus, ohne den Transport über öffentliche Straßen einzuschränken. Insbesondere sind Arbeitsbreiten oberhalb von 9 m, insbesondere 14- und 16-reihige Maisgebisse bei einem Reihenabstand von 0,75 m, möglich, deren Transportbreite bei höchstens 3 m liegen. Damit ist der Erntevorsatz gar ohne Sondergenehmigung über öffentliche Straßen transportabel.

Die Aufgabe wird weiterhin durch ein Überführungsverfahren zur Überführung des Erntevorsatzes von der Arbeitsstellung in die Transportstellung und/oder von der Transportstellung in die Arbeitsstellung gelöst. Nachfolgend wird das Überführungsverfahren zur Überführung des Erntevorsatzes von der Arbeitsstellung in die Transportstellung im Detail beschrieben. Das Überführungsverfahren zur Überführung des Erntevorsatzes von der Transportstellung in die Arbeitsstellung läuft bevorzugt zeitlich umgekehrt ab, sodass die nachfolgend beschriebenen Merkmale zeitlich umgekehrt als die Überführung des Erntevorsatzes
von der Transportstellung in die Arbeitsstellung kennzeichnend anzusehen sind.

Das Überführungsverfahren umfasst ein erstes Verschwenken des zweiten Vorsatzsegmentes relativ zum ersten Vorsatzsegment insbesondere um die Zwischensegmentschwenkachse. Außerdem umfasst das Überführungsverfahren ein weiteres Verschwenken des ersten Vorsatzsegmentes relativ zur Rahmenvorrichtung. Das weitere Verschwenken erfolgt in eine erste Schwenkrichtung, das heißt, je nach Perspektive, im Uhrzeigersinn oder entgegen des Uhrzeigersinns. Das Überführungsverfahren ist dadurch gekennzeichnet, dass das erste Verschwenken beginnt, bevor das weitere Verschwenken beginnt.

Das erste Vorsatzsegment schließt in der Arbeitsstellung an das zweite Vorsatzsegment an und ist zumindest teilweise zwischen dem zweiten Vorsatzsegment und der Längsmittelebene angeordnet. Praktisch wird das zweite Vorsatzsegment zunächst zumindest teilweise hoch verschwenkt, bevor das erste Vorsatzsegment verschwenkt wird. So wird das Risiko einer Kollision des Erntevorsatzes mit einem Erdboden oder mit seitlich des Erntevorsatzes befindlichen Elementen der Umgebung verringert. Bevorzugt erfolgt das erste Verschwenken zumindest im Wesentlichen um 180° und/oder das zweite Verschwenken zumindest im Wesentlichen um 90°. Insbesondere das zweite Verschwenken kann von einer komplexen Bewegung, beispielsweise einschließlich einer translatorischen Bewegungskomponente, umfasst sein. Die komplexe Bewegung hat jedenfalls die Rotation im mechanischen / physikalischen Sinne zu beinhalten.

Bevorzugt erfolgt das erste Verschwenken in eine zweite Schwenkrichtung, die der ersten Schwenkrichtung entgegengesetzt ist. Das erste Verschwenken erfolgt also entgegen dem Uhrzeigersinn bzw. im Uhrzeigersinn. Die entgegengesetzten Schwenkrichtungen betreffen ausdrücklich unterschiedliche geometrische Schwenkachsen. Durch diese Ausbildung des Überführungsverfahrens ist insbesondere zu erreichen, dass die Segmentförderrichtung des ersten Vorsatzsegmentes in der Transportstellung von der Aufstandsebene weggerichtet ist.

Bevorzugt läuft das Überführungsverfahren derart ab, dass ein zweites Verschwenken des ersten Vorsatzsegmentes relativ zur Rahmenvorrichtung in die zweite Schwenkrichtung erfolgt. Das zweite Verschwenken beginnt bevorzugt und/oder endet besonders bevorzugt vor dem weiteren Verschwenken. Das erste Vorsatzsegment wird während des Überführungsverfahrens, also nacheinander in zwei unterschiedliche Schwenkrichtungen verschwenkt. Dadurch ist insbesondere zunächst ein Lösen des ersten Vorsatzsegmentes aus einer besonders zuverlässigen Verriegelung dessen möglich, bevor es in seine platzsparende Position für die Transportstellung verbracht wird. Das weitere Verschwenken beginnt insbesondere dann, wenn das zweite Verschwenken endet. Dadurch ist das Überführungsverfahren besonders zeitsparend.

Bevorzugt umfasst das zweite Verschwenken ein Verschwenken des Überführungselementes relativ zur Rahmenvorrichtung um die Überführungsrahmenschwenkachse. Besonders bevorzugt umfasst das zweite Verschwenken ausschließlich das Verschwenken des Überführungselementes relativ zur Rahmenvorrichtung um die Überführungsrahmenschwenkachse. Dadurch ist das Überführungsverfahren einfach auszuführen, ohne den Funktionsumfang einzuschränken.

Das zweite Verschwenken beginnt bevorzugt während des ersten Verschwenkens. Besonders bevorzugt endet das zweite Verschwenken auch während des ersten Verschwenkens. Dadurch lässt sich insofern Zeit einsparen, als die Verschwenkung der beiden Vorsatzsegmente zueinander zumindest in einem frühen Stadium weitgehend unabhängig von der Verschwenkung des ersten Vorsatzsegmentes relativ zur Rahmenvorrichtung ist.

Vorzugsweise endet das erste Verschwenken bevor oder während das weitere Verschwenken endet. Das bedeutet insbesondere, dass das zweite Vorsatzsegment vollständig an das erste Vorsatzsegment herangeklappt ist, bevor das erste Vorsatzsegment relativ zur Rahmenvorrichtung seine endgültige Position erreicht hat. Dadurch ist eine Kollision der äußeren Vorsatzsegmente insbesondere in dem Fall zu vermeiden, dass ihre Segmentförderwege länger sind als der Segmentförderweg des ersten Vorsatzsegmentes.

Das weitere Verschwenken umfasst bevorzugt ein drittes Verschwenken des ersten Vorsatzsegmentes relativ zum Überführungselement um die Überführungssegmentschwenkachse und/oder ein viertes Verschwenken des Überführungselementes relativ zur Rahmenvorrichtung um die Überführungsrahmenschwenkachse. Insbesondere umfasst das weitere Verschwenken ausschließlich das dritte Verschwenken und das vierte Verschwenken. Durch die Nutzung des Überführungselementes und damit zweier Schwenkachsen für das weitere Verschwenken lässt sich eine besonders weite seitliche Verlagerung des ersten Vorsatzsegmentes bei einer besonders belastbaren Lagerung dessen an der Rahmenvorrichtung erreichen.

Bevorzugt beginnt, besonders bevorzugt endet, das dritte Verschwenken, bevor oder während das vierte Verschwenken beginnt. Insbesondere schließen das dritte Verschwenken und das vierte Verschwenken unmittelbar aneinander an. Hierdurch wird einerseits Zeit gespart und andererseits durch die Vermeidung einer gleichzeitigen Verschwenkung um die Überführungssegmentschwenkachse und um die Überführungsrahmenschwenkachse eine höhere Zuverlässigkeit des Überführungsverfahrens erreicht.

Bevorzugt beginnen, besonders bevorzugt enden, das zweite Verschwenken, das dritte Verschwenken und/oder das vierte Verschwenken, bevor das erste Verschwenken endet. Vorzugsweise enden das zweite und das dritte Verschwenken vor dem ersten Verschwenken, wohingegen das vierte Verschwenken nach dem ersten Verschwenken endet. Somit lassen sich die unterschiedlichen Funktionen der Überführungseinrichtung parallel ausführen, ohne seine Zuverlässigkeit einzuschränken. Das Überführungsverfahren umfasst insbesondere keine über das erste bis vierte Verschwenken hinausgehenden Bewegungen der Vorsatzsegmente relativ zur Rahmenvorrichtung.

Die Aufgabe wird ferner gelöst durch ein Feldhäckslersystem. Das Feldhäckslersystem umfasst einen Feldhäcksler. Der Feldhäcksler weist ein Fahrwerk mit mehreren an die Aufstandsebene angrenzenden Fahrelementen, eine Einzugseinrichtung, eine Häckselaggregat und einen Auswurfkrümmer auf. Das Feldhäckslersystem umfasst außerdem den vorbeschriebenen Erntevorsatz, der mittels der Rahmenvorrichtung derart mit dem Feldhäcksler gekoppelt ist, dass die Einzugseinrichtung im Betrieb Maispflanzen aus dem Einzugsbereich zumindest anteilig entgegen der Fahrtrichtung einzieht. Das Feldhäckslersystem ist insbesondere zur Ausführung des vorbeschriebenen Überführungsverfahrens ausgebildet.

Weitere Einzelheiten und Vorteile der Erfindung lassen sich den schematisch dargestellten und nachfolgend beschriebenen Figuren entnehmen; es zeigen:
- Fig. 1: eine Frontansicht eines vereinfacht dargestellten ersten erfindungsgemäßen Erntevorsatzes in einer Arbeitsstellung,
- Fig. 2: eine Frontansicht des ersten Erntevorsatzes in einer ersten Zwischenstellung,
- Fig. 3: eine Frontansicht des ersten Erntevorsatzes in einer zweiten Zwischenstellung,
- Fig. 4: eine Frontansicht des ersten Erntevorsatzes in einer dritten Zwischenstellung,
- Fig. 5: eine Frontansicht des ersten Erntevorsatzes in einer vierten Zwischenstellung,
- Fig. 6: eine Frontansicht des ersten Erntevorsatzes in einer Transportstellung,
- Fig. 7: eine weiter vereinfachte Frontansicht des ersten Erntevorsatzes in der Arbeitsstellung,
- Fig. 8: eine Seitenansicht des ersten Erntevorsatzes gemäß Fig. 7,
- Fig. 9: eine Draufsicht des ersten Erntevorsatzes gemäß Fig. 7,
- Fig. 10: ein Schwenkwinkel-Zeit-Diagramm,
- Fig. 11: eine Seitenansicht eines Feldhäckslers mit einem zweiten erfindungsgemäßen Erntevorsatz in der Arbeitsstellung,
- Fig. 12: eine Draufsicht des Feldhäckslers mit dem zweiten Erntevorsatz gemäß Fig. 11,
- Fig. 13: eine Frontansicht des Feldhäckslers und des zweiten Erntevorsatzes gemäß Fig. 11,
- Fig. 14: eine Seitenansicht des Feldhäckslers und des zweiten Erntevorsatzes in einer Transportstellung,
- Fig. 15: eine Draufsicht des Feldhäckslers und des zweiten Erntevorsatzes gemäß Fig. 14,
- Fig. 16: eine Frontansicht des Feldhäckslers und des zweiten Erntevorsatzes gemäß Fig. 14,
- Fig. 17: eine Frontansicht des teilweise dargestellten zweiten Erntevorsatzes gemäß Fig. 11,
- Fig. 17a: eine vergrößerte Darstellung eines Details der Fig. 17,
- Fig. 18: eine Frontansicht des teilweise dargestellten zweiten Erntevorsatzes in der vierten Zwischenstellung,
- Fig. 18a: eine vergrößerte Darstellung eines Details der Fig. 18.

Identisch oder ähnlich wirkende oder ausgebildete Teile der erfindungsgemäßen Ausführungsbeispiele sind in den Figuren selektiv mit den gleichen Bezugsziffern versehen. In Bezug auf eines dieser Teile beschriebene Merkmale sind als in Bezug auf sämtliche dieser Teile beschrieben zu verstehen. In Bezug auf eines von zwei spiegelsymmetrisch angeordneten Teilen beschriebene Merkmale sind als in Bezug auf das weitere der Teile beschrieben zu verstehen. Erfindungsgemäße Weiterbildungen ergeben sich auch aus anderen Kombinationen der beschriebenen Merkmale als dargestellt.

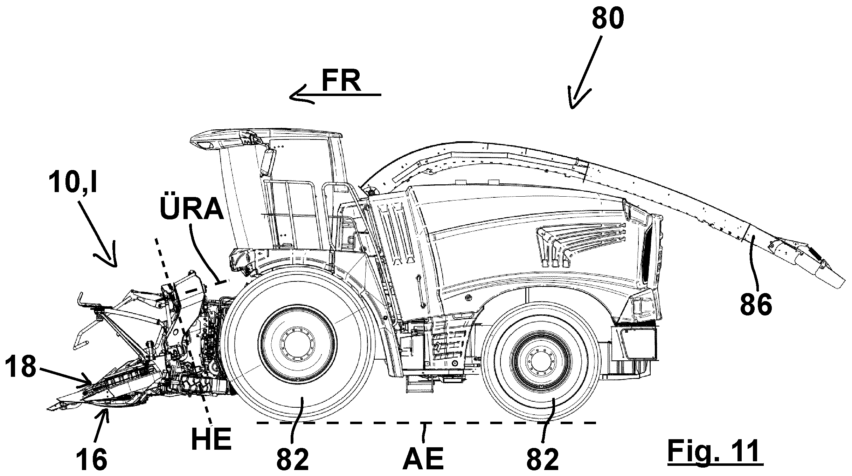

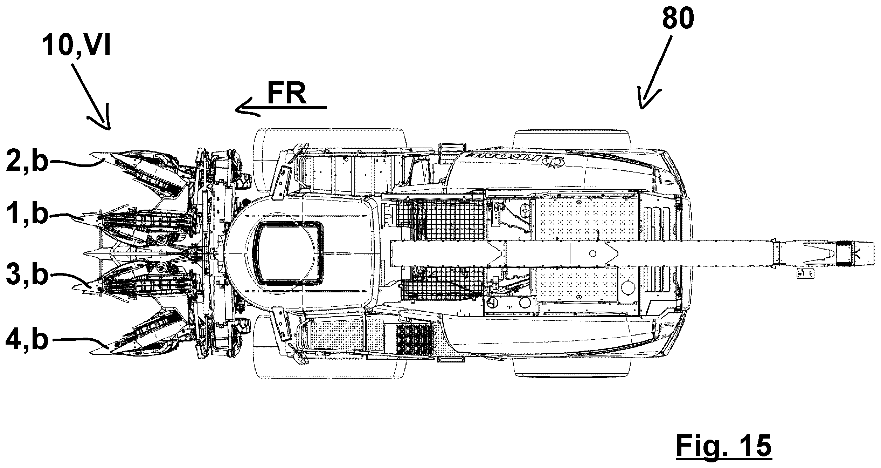

Die Figuren zeigen unterschiedliche erfindungsgemäße Erntevorsätze 10, die jeweils zur reihenunabhängigen Ernte von Mais ausgebildet sind. Die Erntevorsätze 10 umfassen jeweils eine Rahmenvorrichtung 12, die zur Kopplung des jeweiligen Erntevorsatzes 10 mit einem als Feldhäcksler 80 ausgebildeten Erntefahrzeug vorgesehen ist. Die Fig. 11 bis 18a zeigen einen zweiten erfindungsgemäßen Erntevorsatz 10 mit dem Feldhäcksler 80 gekoppelt.

Der Feldhäcksler 80 und der Erntevorsatz 10 bilden gemeinsam ein als Feldhäckslersystem ausgebildetes Erntesystem. Der Feldhäcksler 80 weist ein Fahrwerk mit vier Fahrelementen 82 auf, die jeweils an eine Aufstandsebene AE angrenzen. Der Feldhäcksler 80 weist ferner eine Einzugseinrichtung 84 auf, die sich in Fahrtrichtung FR betrachtet zwischen den vorderen Fahrelementen 82 und anschließend an einen Einzugsbereich 14 des Erntevorsatzes 10 erstreckt (sh. Fig. 11 ff.). In Gutflussrichtung folgen auf die Einzugseinrichtung 84 ein nicht dargestelltes Häckselaggregat und ein Auswurfkrümmer 86 des Feldhäckslers 80, der in den Fig. 11 ff. vereinfacht jeweils in einer Krümmertransportstellung dargestellt ist. Im Betrieb bewegt sich der Feldhäcksler 80 mit dem Erntevorsatz 10 in die Fahrtrichtung FR fort.

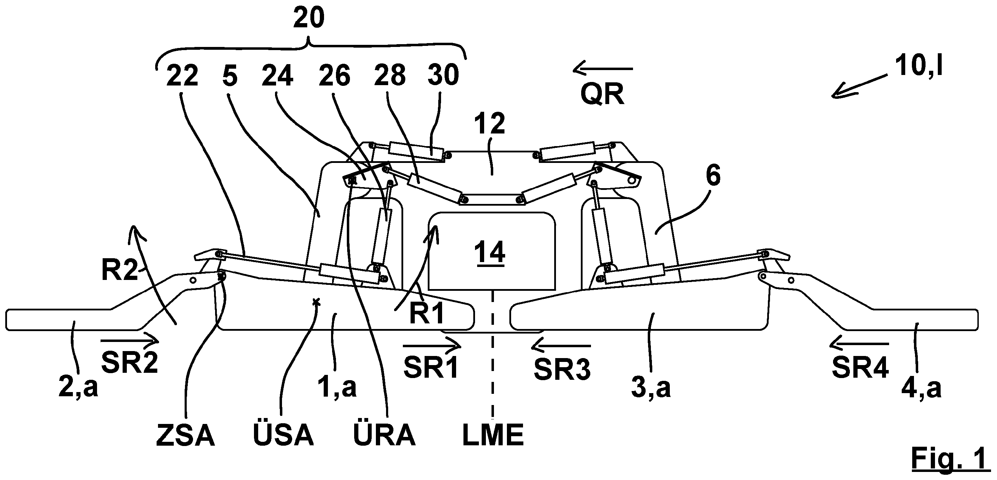

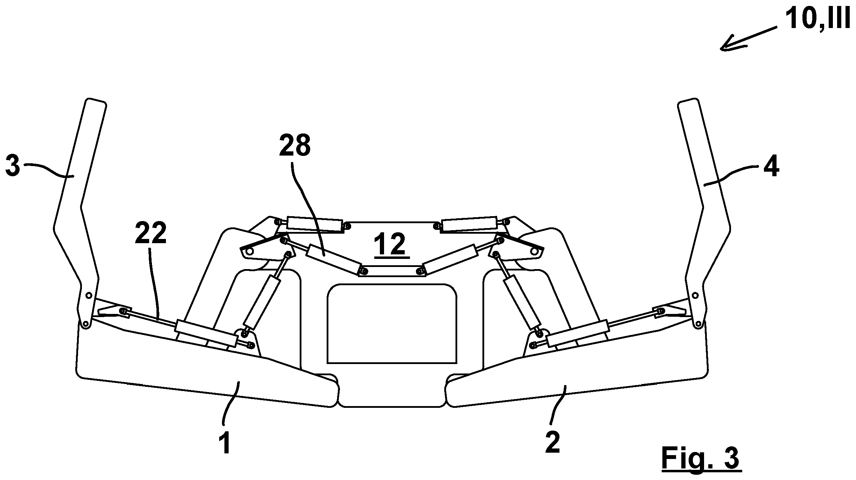

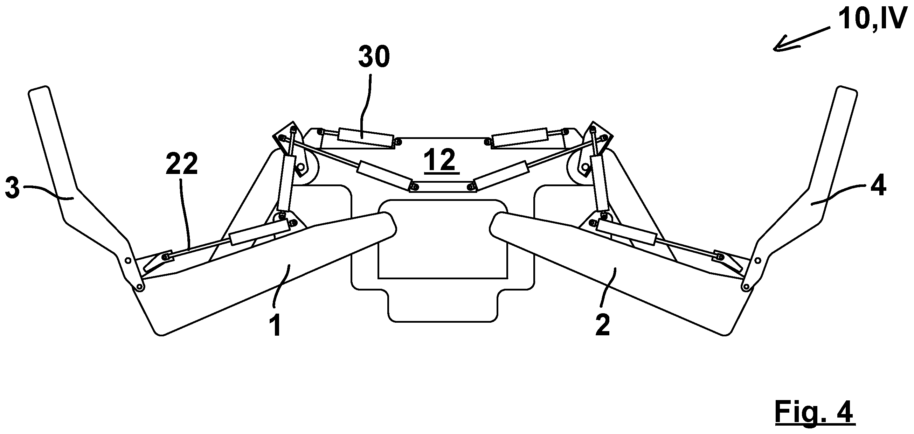

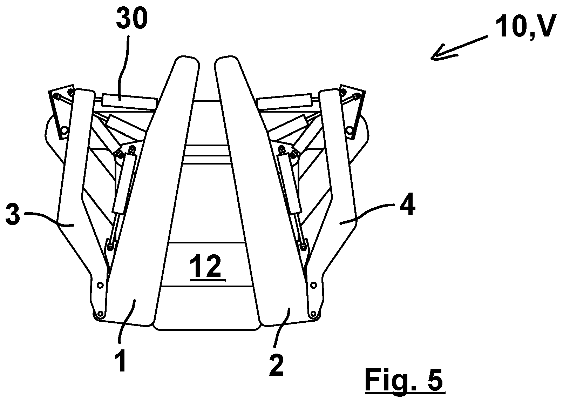

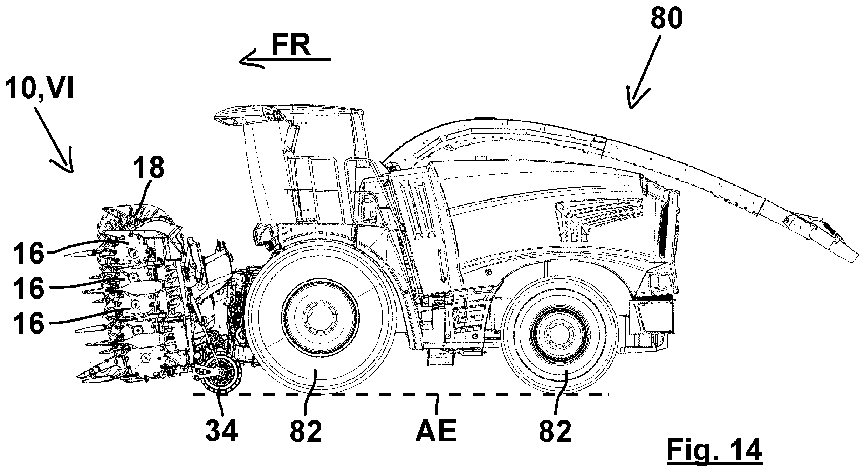

Sowohl das erste Ausführungsbeispiel des Erntevorsatzes 10 als auch das zweite Ausführungsbeispiel des Erntevorsatzes 10 weist je vier Vorsatzsegmente 1, 2, 3, 4 auf. Jedes der Vorsatzsegmente 1, 2, 3, 4 weist eine Mehrzahl von im Betrieb rotierenden Schneidelementen 16 zum Schneiden von Maispflanzen auf. Außerdem weist jedes der Vorsatzsegmente 1, 2, 3, 4 genau ein im Betrieb als Förderkette umlaufendes Förderelement 18 zum Fördern der Maispflanzen in eine Segmentförderrichtung SR1, SR2, SR3, SR4 auf (siehe Fig. 11 und 14). Das erste Ausführungsbeispiel des Erntevorsatzes 10 ist mit den Fig. 1 bis 9 derart vereinfacht dargestellt, dass die Schneidelemente 16 und die Förderelemente 18 nicht dargestellt sind.

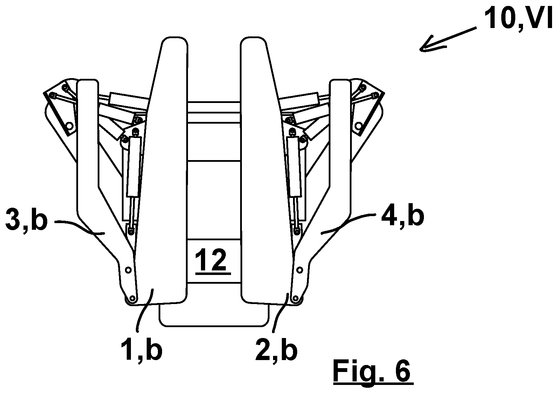

Beide Ausführungsbeispiele des Erntevorsatzes 10 weisen eine Überführungseinrichtung 20 zur Überführung des jeweiligen Erntevorsatzes 10 von einer Arbeitsstellung I (Fig. 1, 11 bis 13) in eine Transportstellung VI (Fig. 6, 14 bis 16) auf. In der Arbeitsstellung schließen die Vorsatzsegmente 1, 2, 3, 4 in eine Querrichtung QR aneinander an, die rechtwinklig zur Fahrtrichtung FR und parallel zur Aufstandsebene AE ausgerichtet ist. Die Vorsatzsegmente 1, 2, 3, 4 schließen in der Arbeitsstellung I derart aneinander an, dass ihre Segmentförderrichtungen SR1, SR2, SR3, SR4 parallel zur Querrichtung QR und auf den Einzugsbereich 14 ausgerichtet sind. Die Vorsatzsegmente 1, 2, 3, 4 sind in der Arbeitsstellung I des Erntevorsatzes 10 in einer ersten Stellung a angeordnet. Der Einzugsbereich 14 wird von einer zur Querrichtung QR rechtwinkligen Längsmittelebene LME geschnitten, zu der der Erntevorsatz 10 im Wesentlichen spiegelsymmetrisch ausgebildet ist. Die Segmentförderrichtungen SR1 und SR2 sind daher den Segmentförderrichtungen SR3 und SR4 entgegengerichtet. Das erste Fördersegment 1 und das zweite Fördersegment 2 erstrecken sich in der Arbeitsstellung I in den Einzugsbereich 14.

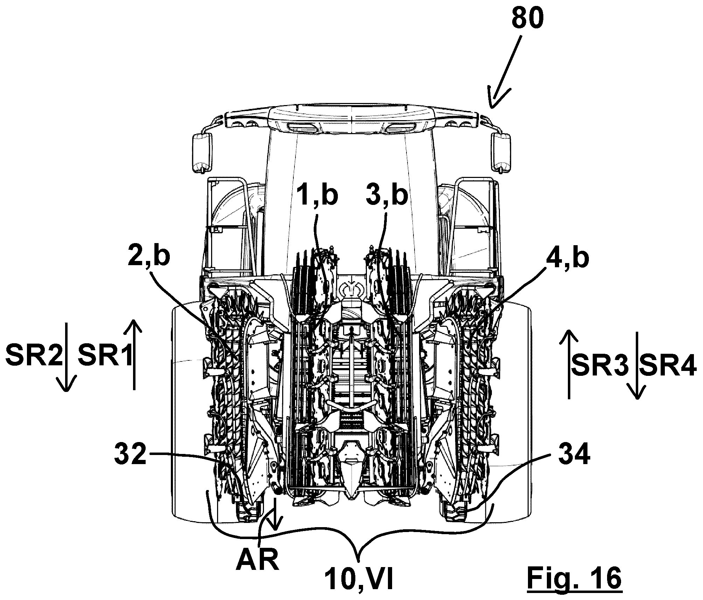

In der Transportstellung VI sind die Vorsatzsegmente 1, 2, 3, 4 derart angeordnet, dass ihre Segmentförderrichtungen SR1, SR2, SR3 und SR4 sämtlich zumindest im Wesentlichen parallel zur Längsmittelebene LME ausgerichtet sind. Die Vorsatzsegmente 1, 2, 3, 4 sind in der Transportstellung VI des Erntevorsatzes 10 in einer zweiten Stellung b angeordnet, in der sie ausgehend von ihrer ersten Stellung a relativ zur Rahmenvorrichtung 12 um ca. 90° verschwenkt angeordnet sind. In der Transportstellung VI sind die erste Segmentförderrichtung SR1 des ersten Vorsatzsegmentes 1 und die dritte Segmentförderrichtung SR3 des dritten Vorsatzsegmentes 3 von der Aufstandsebene AE weggerichtet, wohingegen die zweite Segmentförderrichtung SR2 des zweiten Vorsatzsegmentes 2 und die vierte Segmentförderrichtung SR4 des vierten Vorsatzsegmentes 4 auf die Aufstandsebene AE gerichtet sind (Fig. 16). Außerdem ist in der Transportstellung VI das zweite Vorsatzsegment 2 in Fahrtrichtung FR wenigstens überwiegend vor dem ersten Überführungselement 5 angeordnet. Analog ist in der Transportstellung VI das vierte Vorsatzsegment 4 in Fahrtrichtung FR wenigstens überwiegend vor dem zweiten Überführungselement 6 angeordnet.

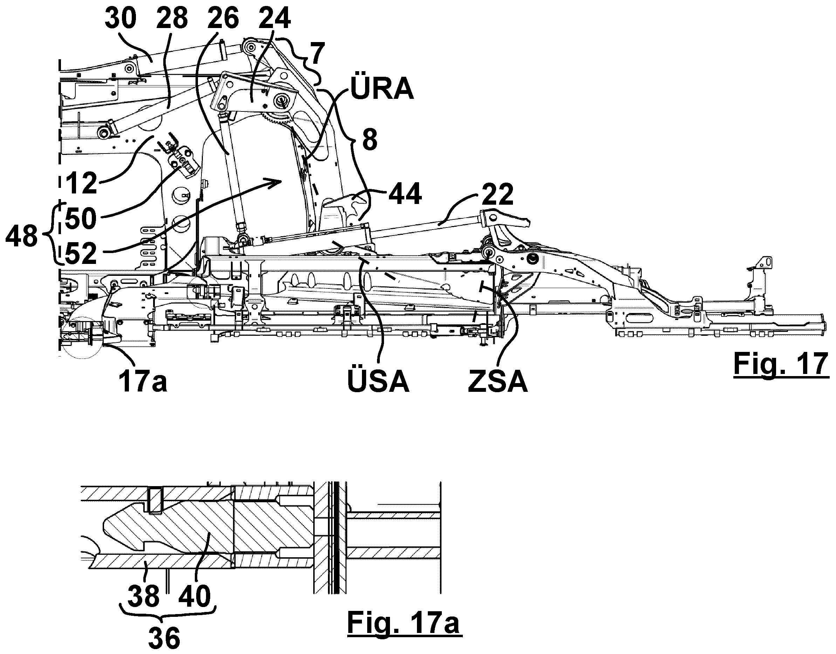

Das erste Vorsatzsegment 1 ist mittels eines ersten Überführungselementes 5 an der Rahmenvorrichtung 12 angeordnet. Das dritte Vorsatzsegment 3 ist spiegelsymmetrisch mittels eines zweiten Überführungselementes 6 an der Rahmenvorrichtung 12 gelagert (Fig. 1). Beide Überführungselemente 5, 6 weisen je einen Aktorschenkel 7 und einen Segmentschenkel 8 auf (sh. Fig. 17). Der weitere spiegelsymmetrische Aufbau des Erntevorsatzes 10 wird nachfolgend exemplarisch nur für eine Seite dessen beschrieben.

Das erste Vorsatzsegment 1 ist schwenkbeweglich um eine Überführungssegmentschwenkachse ÜSA an dem ersten Überführungselement 5 gelagert. Das erste Überführungselement 5 ist schwenkbeweglich um eine Überführungsrahmenschwenkachse ÜRA an der Rahmenvorrichtung 12 gelagert. Das erste Überführungselement 5 ist derart ausgebildet, dass ein sich um die Überführungsrahmenschwenkachse ÜRA erstreckendes Ende des ersten Überführungselementes 5 sich einerseits einer zur Überführungsrahmenschwenkachse ÜRA rechtwinkligen Hilfsebene HE (sh. Fig. 11) erstreckt, wohingegen ein sich um die Überführungssegmentschwenkachse ÜSA erstreckendes Ende des ersten Überführungselementes 5 sich andererseits der Hilfsebene erstreckt. Der Segmentschenkel 8 erstreckt sich zwischen der Überführungssegmentschwenkachse ÜSA und der Überführungsrahmenschwenkachse ÜRA. Das zweite Vorsatzsegment 2 ist schwenkbeweglich um eine Zwischensegmentschwenkachse ZSA am ersten Vorsatzsegment 1 gelagert.

Zur Verschwenkung des zweiten Vorsatzsegmentes 2 um die Zwischensegmentschwenkachse ZSA weist der Erntevorsatz 10 zwischen dem ersten Vorsatzsegment 1 und dem zweiten Vorsatzsegment 2 einen ersten Aktor 22 auf, der zumindest in der Arbeitsstellung I des Erntevorsatzes 10 in Fahrtrichtung FR vor dem ersten Überführungselement 5 angeordnet ist. Zur Verschwenkung des ersten Vorsatzsegmentes 1 um die Überführungssegmentschwenkachse ÜSA weist der Erntevorsatz 10 einen zweiten Aktor 28 zwischen der Rahmenvorrichtung 12 und ein um die Überführungsrahmenschwenkachse ÜRA schwenkbewegliches Übersetzungselement 24 auf. Zwischen dem Übersetzungselement 24 und dem ersten Vorsatzsegment 1 ist ein beidseitig schwenkbeweglich gelagerter Lenker 26 angeordnet. Zur Verschwenkung des ersten Überführungselementes 5 um die Überführungsrahmenschwenkachse ÜRA weist der Erntevorsatz 10 einen dritten Aktor 30 zwischen der Rahmenvorrichtung 12 und dem ersten Überführungselement 5 auf. Der Aktorschenkel 7 erstreckt sich zwischen dem dritten Aktor 30 und der Überführungsrahmenschwenkachse ÜRA. Der zweite Aktor und der dritte Aktor 30 erstrecken sich in der Arbeitsstellung I des Erntevorsatzes 10 oberhalb des ersten Vorsatzsegmentes 1. In Bezug auf die Vorsatzsegmente 1, 2, 3, 4, die Überführungselemente 5, 6, die Aktoren 22, 28, 30, die Übersetzungselemente 24, die Lenker 26 und die Rahmenvorrichtung 12 ist der Erntevorsatz 10 in Bezug auf die Längsmittelebene LME spiegelsymmetrisch ausgebildet.

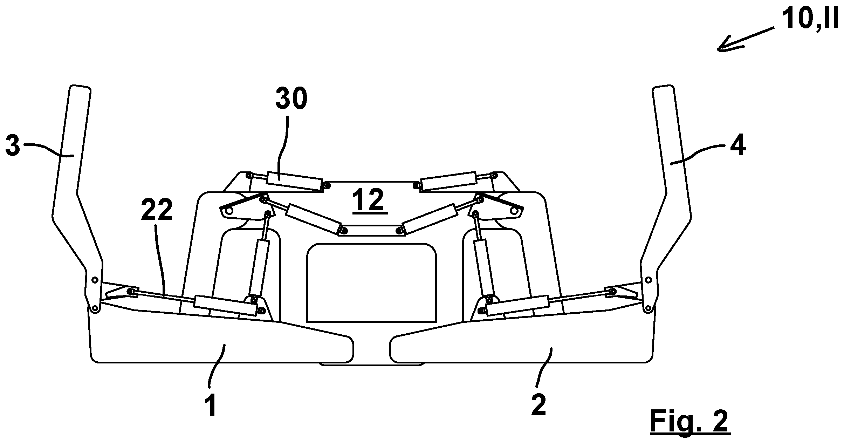

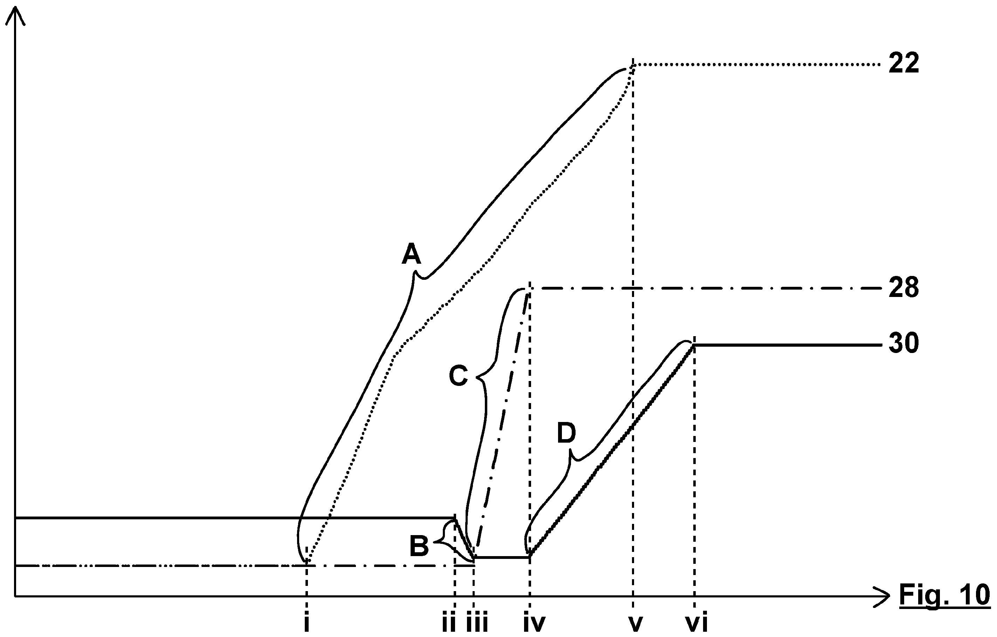

Durch die Aktoren 22, 28, 30 des Erntevorsatzes 10 lässt sich ein Überführungsverfahren zur Überführung des Erntevorsatzes 10 von der Arbeitsstellung I in die Transportstellung VI ausführen. Bei der Überführung durchläuft der Erntevorsatz 10 zwischen der Arbeitsstellung I und der Transportstellung VI vier Zwischenstellungen II bis V, die durch die Fig. 2 bis 5 veranschaulicht sind. Die Wirkung der Aktoren 22, 28, 30 während des Überführungsverfahrens sind durch das Diagramm gemäß Fig. 10 veranschaulicht.

Gemäß dem erfindungsgemäßen Überführungsverfahren beginnt ein erstes Verschwenken A des zweiten Vorsatzsegmentes 2 relativ zum ersten Vorsatzsegment 1 (Zeitpunkt i), bevor ein weiteres Verschwenken C, D des ersten Vorsatzsegmentes 1 relativ zur Rahmenvorrichtung 12 in eine erste Schwenkrichtung R1 beginnt (Zeitpunkt iii). Das erste Verschwenken A erfolgt in eine zweite Schwenkrichtung R2, die der ersten Schwenkrichtung R1 entgegengesetzt ist. In der Frontansicht gemäß den Fig. 1 bis 6 entspricht die zweite Schwenkrichtung R2 dem Uhrzeigersinn und ist die erste Schwenkrichtung R1 dem Uhrzeigersinn entgegengerichtet.

Ein zweites Verschwenken B des ersten Vorsatzsegmentes 1 relativ zur Rahmenvorrichtung 12 in die zweite Schwenkrichtung R2 beginnt und endet (Zeitpunkte ii, iii) vor dem weiteren Verschwenken C, D. Das zweite Verschwenken B umfasst ein Verschwenken des Überführungselementes 5 relativ zur Rahmenvorrichtung 12 um die Überführungsrahmenschwenkachse ÜRA. Das zweite Verschwenken B beginnt während des ersten Verschwenkens A (Zeitpunkt ii).

Das erste Verschwenken A endet (Zeitpunkt v), bevor das weitere Verschwenken C, D endet (Zeitpunkt vi). Das weitere Verschwenken C, D umfasst ein drittes Verschwenken C und ein viertes Verschwenken D. Beim dritten Verschwenken C wird das erste Vorsatzsegment 1 relativ zum Überführungselement 5 um die Überführungssegmentschwenkachse ÜSA verschwenkt. Beim vierten Schwenken D wird das Überführungselement 5 relativ zur Rahmenvorrichtung 12 um die Überführungsrahmenschwenkachse ÜRA verschwenkt. Das dritte Verschwenken C beginnt und endet (Zeitpunkte iii, iv), bevor oder während das vierte Verschwenken D beginnt (Zeitpunkt iv). Das zweite Verschwenken B und das dritte Verschwenken C enden, bevor das erste Verschwenken A endet (Zeitpunkt v). Das vierte Verschwenken D beginnt (Zeitpunkt iv) bevor das erste Verschwenken A endet (Zeitpunkt v).

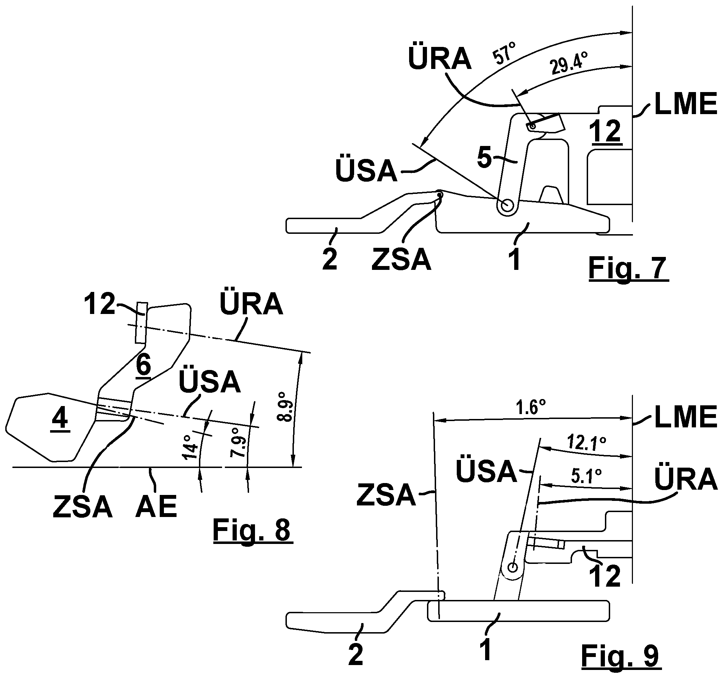

Die Fig. 7 bis 9 sind unterschiedliche Ansichten einer Hälfte des ersten Erntevorsatzes 10 gemäß den Fig. 1 bis 6, wobei die Darstellung durch eine weitere Vereinfachung teilweise von der Darstellung gemäß den Fig. 1 bis 6 abweicht. Die Fig. 7 bis 9 enthalten Winkelangaben zur Veranschaulichung der Lage der Überführungsrahmenschwenkachse ÜRA, der Überführungssegmentschwenkachse ÜSA und der Zwischensegmentschwenkachse ZSA.

Die Fig. 11 bis 16 veranschaulichen Stützräder 32, 34. Ein erstes Stützrad 32 ist am zweiten Vorsatzsegment 2 angeordnet. Das erste Stützrad 32 ist derart am zweiten Vorsatzsegment gelagert, dass eine Drehachse des ersten Stützrades 32 in der Transportstellung VI parallel zur Aufstandsebene AE ausgerichtet ist. In der Arbeitsstellung I ist die Drehachse relativ zur Aufstandsebene AE um einen Winkel angewinkelt, um den die Segmentförderrichtung SR2 des zweiten Vorsatzsegmentes 2 in der Transportstellung VI zur Aufstandsebene AE angewinkelt ist. Das zweite Stützrad 34 ist spiegelsymmetrisch zum ersten Stützrad 32 am vierten Vorsatzsegment 4 angeordnet.

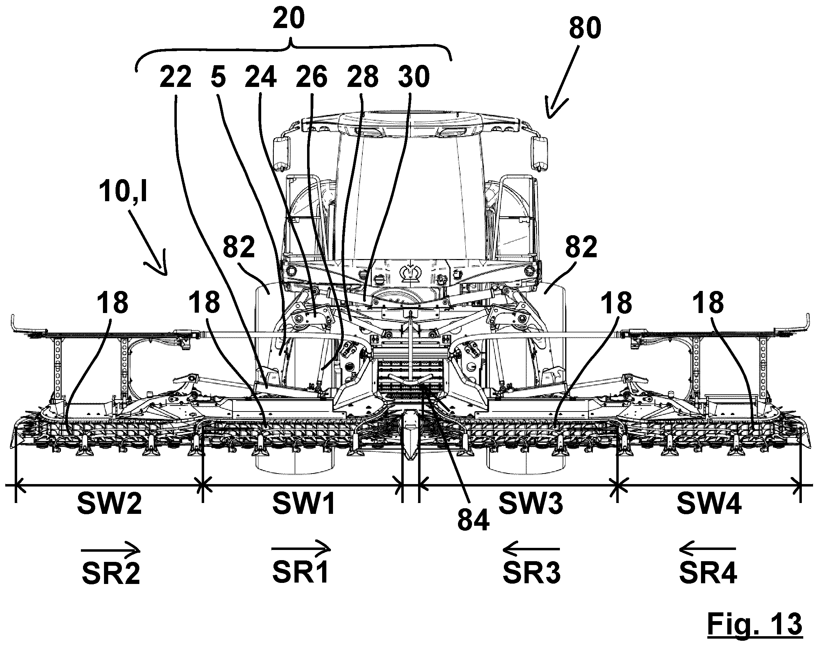

Fig. 13 veranschaulicht die Förderelemente 18 der Vorsatzsegmente 1, 2, 3, 4 in der Arbeitsstellung I des Erntevorsatzes 10. Jedes Vorsatzsegment 18 ist zum Fördern von Maispflanzen über einen vorsatzsegmentspezifischen Segmentförderweg SW1, SW2, SW3, SW4 ausgebildet. Im dargestellten Ausführungsbeispiel sind die Segmentförderwege SW1 und SW3 größer als die Segmentförderwege SW2 und SW4. Insbesondere bei erfindungsgemäßen Erntevorsätzen 10 mit größeren Arbeitsbreiten als sie die dargestellten Ausführungsbeispiele haben, sind die Segmentförderwege SW2 und SW4 bevorzugt größer als die Segmentförderwege SW1 und SW3.

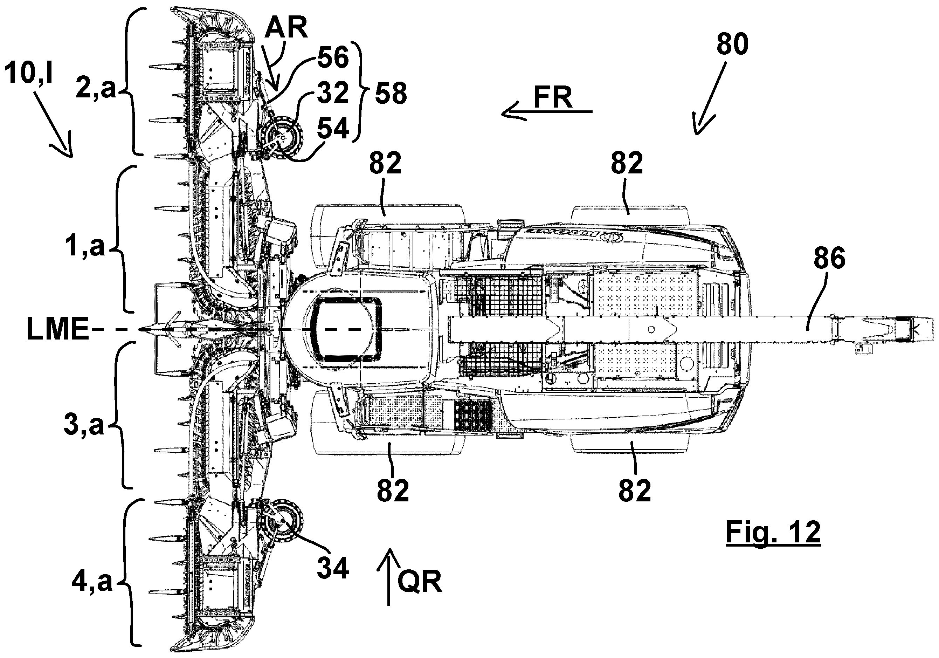

Fig. 12 veranschaulicht zwei Stützräder 32,34. Ein erstes des Stützräder 32 ist von einer Stützradeinrichtung 58 umfasst. Die Stützradeinrichtung 58 umfasst außerdem einen Stützradaktor 56, der in eine Radaktorrichtung AR längenveränderlich ist. Ferner umfasst die Stützradeinrichtung 58 ein Radlenkerelement 54, das schwenkbeweglich am zweiten Vorsatzsegment 2 angeordnet ist. Ein zweites der Stützräder 34 ist gleichartig und spiegelsymmetrisch zum ersten Stützrad 32 am vierten Vorsatzsegment 4 gelagert.

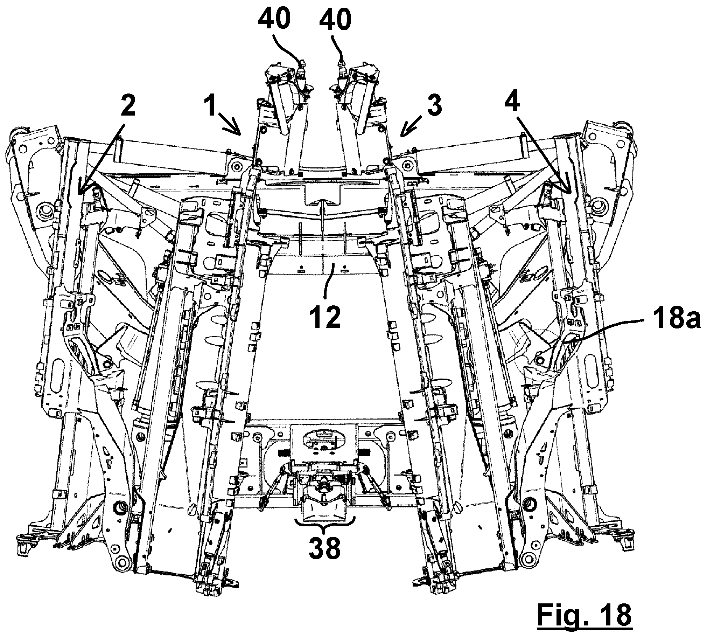

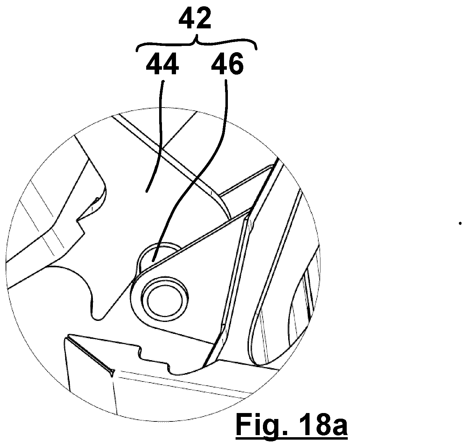

Die Fig. 17 und 18 stellen den zweiten Erntevorsatz 10 insofern teilweise in der Arbeitsstellung I dar, als beispielsweise keine Schneidelemente und keine Förderelemente dargestellt sind, um die nachfolgend beschriebenen Komponenten besser zu veranschaulichen. Die Fig. 17 ist eine Frontansicht einer Hälfte des zweiten Erntevorsatzes 10. Die Fig. 17 veranschaulicht eine Rahmenüberführungsverriegelungsvorrichtung 48 zur Fixierung des zweiten Überführungselementes 6 an der Rahmenvorrichtung 12, wenn der Erntevorsatz in der Transportstellung VI angeordnet ist. Die Rahmenüberführungsverriegelungsvorrichtung 48 umfasst einen ersten Verriegelungspartner 50 an der Rahmenvorrichtung 12 und einen zweiten Verriegelungspartner 52 am zweiten Überführungselement 6, die in der gezeigten Arbeitsstellung I des Erntevorsatzes 10 voneinander beabstandet sind und in der Transportstellung VI miteinander im Eingriff sind.

Das Bezugszeichen 17a kennzeichnet in der Fig. 17 einen Bereich der Frontansicht, der in Fig. 17a vergrößert dargestellt ist. Der Bereich zeigt eine Rahmensegmentverriegelungsvorrichtung 36 zur Fixierung des dritten Vorsatzsegmentes 3 an der Rahmenvorrichtung 12, wenn der Erntevorsatz in der Arbeitsstellung angeordnet ist. Die Rahmensegmentverriegelungsvorrichtung 36 umfasst einen ersten Verriegelungspartner 38 an der Rahmenvorrichtung 12, einen zweiten Verriegelungspartner 40 an dem dritten Vorsatzsegment 3 und einen weiteren zweiten Verriegelungspartner 40 an dem ersten Vorsatzsegment 1 (sh. Fig. 18). Der erste Verriegelungspartner 38 ist als entgegen der Querrichtung QR offene Ausnehmung ausgebildet. Der zweite Verriegelungspartner 40 ist als sich in die Querrichtung QR erstreckender Stift ausgebildet.

Die Fig. 18 zeigt den zweiten Erntevorsatz 10 teilweise in der vierten Zwischenstellung dar. Das Bezugszeichen 18a kennzeichnet in der Fig. 18 einen Bereich der Frontansicht, der in Fig. 18a vergrößert dargestellt ist. Der Bereich zeigt eine Überführungssegmentverriegelungsvorrichtung 42 zur Fixierung des vierten Vorsatzsegmentes 4 am zweiten Überführungselement 6, wenn der Erntevorsatz in der Transportstellung VI angeordnet ist. Die Überführungssegmentverriegelungsvorrichtung 42 umfasst einen ersten Verriegelungspartner 44 an dem zweiten Überführungselement 6 (sh. auch Fig. 17) und einen zweiten Verriegelungspartner 46 an dem vierten Vorsatzsegment 4. Der erste Verriegelungspartner 44 ist als Haken ausgebildet. Der zweite Verriegelungspartner 46 ist als einzuhakender Bolzen ausgebildet.

### Bezugszeichenliste

- 1: erstes Vorsatzsegment
- 2: zweites Vorsatzsegment
- 3: drittes Vorsatzsegment
- 4: viertes Vorsatzsegment
- 5: erstes Überführungselement
- 6: zweites Überführungselement
- 7: Aktorschenkel
- 8: Segmentschenkel
- 10: Erntevorsatz
- 12: Rahmenvorrichtung
- 14: Einzugsbereich
- 16: Schneidelement
- 18: Förderelement
- 20: Überführungseinrichtung
- 22: erster Aktor
- 24: Übersetzungselement
- 26: Lenkerelement
- 28: zweiter Aktor
- 30: dritter Aktor
- 32: erstes Stützrad
- 34: zweites Stützrad
- 36: Rahmensegmentverriegelungsvorrichtung
- 38: erster Verriegelungspartner
- 40: zweiter Verriegelungspartner
- 42: Überführungssegmentverriegelungsvorrichtung
- 44: erster Verriegelungspartner
- 46: zweiter Verriegelungspartner
- 48: Rahmenüberführungsverriegelungsvorrichtung
- 50: erster Verriegelungspartner
- 52: zweiter Verriegelungspartner
- 54: Radlenkerelement
- 56: Stützradaktor
- 58: Stützradeinrichtung
- 80: Erntefahrzeug
- 82: Fahrelement
- 84: Einzugseinrichtung
- 86: Auswurfkrümmer

- i: Beginn des ersten Verschwenkens
- ii: Beginn des zweiten Verschwenkens
- iii: Beginn des dritten Verschwenkens / Ende des zweiten Verschwenkens
- iv: Beginn des vierten Verschwenkens / Ende des dritten Verschwenkens
- v: Ende des ersten Verschwenkens
- vi: Ende des vierten Verschwenkens

- I: Arbeitsstellung
- II: erste Zwischenstellung
- III: zweite Zwischenstellung
- IV: dritte Zwischenstellung
- V: vierte Zwischenstellung
- VI: Transportstellung

- a: erste Position
- b: zweite Position

- A: erstes Verschwenken
- B: zweites Verschwenken
- C: drittes Verschwenken
- D: viertes Verschwenken
- AE: Aufstandsebene
- AR: Radaktorrichtung
- FR: Fahrtrichtung
- HE: Hilfsebene
- LME: Längsmittelebene
- QR: Querrichtung
- R1: ersten Schwenkrichtung
- R2: zweite Schwenkrichtung

- SR1: Segmentförderrichtung des ersten Vorsatzsegmentes
- SR2: Segmentförderrichtung des zweiten Vorsatzsegmentes
- SR3: Segmentförderrichtung des dritten Vorsatzsegmentes
- SR4: Segmentförderrichtung des vierten Vorsatzsegmentes
- SW1: Segmentförderweg des ersten Vorsatzsegmentes
- SW2: Segmentförderweg des zweiten Vorsatzsegmentes
- SW3: Segmentförderweg des dritten Vorsatzsegmentes
- SW4: Segmentförderweg des vierten Vorsatzsegmentes

- ÜRA: Überführungsrahmenschwenkachse
- ÜSA: Überführungssegmentschwenkachse
- ZSA: Zwischensegmentschwenkachse

## Patentansprüche

1. Erntevorsatz (10) zur reihenunabhängigen Ernte von Mais, umfassend
- eine zur Kopplung mit einem Feldhäcksler (80) ausgebildete Rahmenvorrichtung (12),
- zumindest drei Vorsatzsegmente (1, 2, 3, 4), die jeweils
- zumindest ein im Betrieb umlaufendes Schneidelement (16) zum Schneiden von Maispflanzen und
- zumindest ein im Betrieb umlaufendes Förderelement (18) zum Fördern der Maispflanzen in eine Segmentförderrichtung (SR1, SR2, SR3, SR4)
aufweisen, und
- eine Überführungseinrichtung (20) zur Überführung des Erntevorsatzes (10) von einer Arbeitsstellung (I),
- in der die Vorsatzsegmente (1, 2, 3, 4) derart in eine zur Fahrtrichtung (FR) rechtwinklige Querrichtung (QR) aneinander anschließen, dass ihre Segmentförderrichtungen (SR1, SR2, SR3, SR4) parallel zu einer Aufstandsebene (AE) und auf einen Einzugsbereich (14) ausgerichtet sind, den eine zur Querrichtung (QR) rechtwinklige Längsmittelebene (LME) schneidet und aus dem die Maispflanzen vom Feldhäcksler (80) zumindest anteilig entgegen der Fahrtrichtung (FR) einzuziehen sind,
in eine Transportstellung (VI),
- in der zumindest eines der Vorsatzsegmente (1, 2, 3, 4) derart angeordnet ist, dass seine Segmentförderrichtung (SR1, SR2, SR3, SR4) angewinkelt zur Aufstandsebene (AE) ausgerichtet ist,
wobei die zumindest drei Vorsatzsegmente (1, 2, 3, 4) zumindest ein erstes Vorsatzsegment (1) umfassen, das sich in der Arbeitsstellung (I) in oder durch den Einzugsbereich (14) erstreckt,
**gekennzeichnet durch** eine Ausbildung der Überführungseinrichtung (20) zur Überführung des Erntevorsatzes (10) derart, dass die Segmentförderrichtung (SR1) des erstes Vorsatzsegmentes (1) in der Transportstellung (VI) des Erntevorsatzes (10) angewinkelt zur Aufstandsebene (AE) ausgerichtet ist.

2. Erntevorsatz nach Anspruch 1, **gekennzeichnet durch** eine Ausbildung der Überführungseinrichtung (20) zur Überführung des Erntevorsatzes (10) derart, dass die Segmentförderrichtung (SR1) des erstes Vorsatzsegmentes (1) in der Transportstellung (VI) um zumindest 60° angewinkelt zur Aufstandsebene (AE) ausgerichtet ist, insbesondere parallel zur Längsmittelebene (LME) ausgerichtet ist.

3. Erntevorsatz nach einem der vorhergehenden Ansprüche, **gekennzeichnet durch** eine Ausbildung der Überführungseinrichtung (20) zur Überführung des Erntevorsatzes (10) derart, dass die Segmentförderrichtung (SR1) des erstes Vorsatzsegmentes (1) in der Transportstellung (VI) von der Aufstandsebene (AE) weggerichtet ist.

4. Erntevorsatz nach einem der vorhergehenden Ansprüche, **gekennzeichnet durch** eine Ausbildung der Überführungseinrichtung (20) zur Überführung des Erntevorsatzes (10) derart, dass die Segmentförderrichtungen (SR1, SR2, SR3, SR4) sämtlicher Vorsatzsegmente (1, 2, 3, 4) in der Transportstellung (VI), bevorzugt um zumindest 60°, angewinkelt zur Aufstandsebene (AE) ausgerichtet sind, besonders bevorzugt parallel zur Längsmittelebene (LME), ausgerichtet sind.

5. Erntevorsatz nach einem der vorhergehenden Ansprüche, **dadurch gekennzeichnet, dass** jedes Vorsatzsegment (1, 2, 3, 4) ein als Förderkette ausgebildetes Förderelement (18) und zwei drehbar gelagerte Umlenkelemente aufweist, um die das Förderelement (18) im Betrieb umläuft.

6. Erntevorsatz nach einem der vorhergehenden Ansprüche, **gekennzeichnet durch** zumindest vier, insbesondere genau vier, Vorsatzsegmente (1, 2, 3, 4) und/oder eine bezogen auf die Längsmittelebene (LME) spiegelsymmetrische Ausbildung.

7. Erntevorsatz nach einem der vorhergehenden Ansprüche, **dadurch gekennzeichnet, dass** ein Förderelement (18) des ersten Vorsatzsegmentes (1) zum Fördern von Maispflanzen in seine Segmentförderrichtung (SR1) über einen ersten Segmentförderweg (SW1) und ein Förderelement (18) eines zweiten Vorsatzsegmentes (2), das zumindest in der Arbeitsstellung (I) des Erntevorsatzes (10) an eine von der Längsmittelebene (LME) abgewandte Seite des ersten Vorsatzsegmentes (1) anschließt, zum Fördern von Maispflanzen in seine Segmentförderrichtung (SR2) über einen zweiten Segmentförderweg (SW2) ausgebildet ist, der länger ist als der erste Segmentförderweg (SW1).

8. Erntevorsatz nach einem der vorhergehenden Ansprüche, **dadurch gekennzeichnet, dass** das erste Vorsatzsegment (1) schwenkbeweglich um eine Überführungssegmentschwenkachse (ÜSA) an einem Überführungselement (5) gelagert ist, das schwenkbeweglich um eine Überführungsrahmenschwenkachse (ÜRA) an der Rahmenvorrichtung (12) gelagert ist, und/oder das zweite Vorsatzsegment (2) schwenkbeweglich um eine Zwischensegmentschwenkachse (ZSA) am ersten Vorsatzsegment (1) gelagert ist.

9. Überführungsverfahren zur Überführung des Erntevorsatzes (10) nach einem der vorhergehenden Ansprüche von der Arbeitsstellung (I) in die Transportstellung (VI), wobei ein erstes Verschwenken (A) des zweiten Vorsatzsegmentes (2) relativ zum ersten Vorsatzsegment (1) beginnt (i), bevor ein weiteres Verschwenken (C, D) des ersten Vorsatzsegmentes (1) relativ zur Rahmenvorrichtung (12) in eine erste Schwenkrichtung (R1) beginnt (ii).

10. Überführungsverfahren nach Anspruch 1, **dadurch gekennzeichnet, dass** das erste Verschwenken (A) in eine zweite Schwenkrichtung (R2) erfolgt, die der ersten Schwenkrichtung (R1) entgegengesetzt ist.

11. Überführungsverfahren nach Anspruch 9 oder 10, **gekennzeichnet durch** ein zweites Verschwenken (B) des ersten Vorsatzsegmentes (1) relativ zur Rahmenvorrichtung (12) in eine/die zweite Schwenkrichtung (R2), wobei das zweite Verschwenken (B) vor dem weiteren Verschwenken (C, D) beginnt (ii), insbesondere endet (iii).

12. Überführungsverfahren nach einem der Ansprüche 9 bis 11, **dadurch gekennzeichnet, dass** das zweite Verschwenken (B) ein Verschwenken des Überführungselementes (5) relativ zur Rahmenvorrichtung (12) um die Überführungsrahmenschwenkachse (ÜRA) umfasst.

13. Überführungsverfahren nach einem der Ansprüche 9 bis 12, **dadurch gekennzeichnet, dass** das zweite Verschwenken (B) während des ersten Verschwenkens (A) beginnt (ii).

14. Überführungsverfahren nach einem der Ansprüche 9 bis 13, **dadurch gekennzeichnet, dass** das erste Verschwenken (A) endet (v), bevor oder während das weitere Verschwenken (C, D) endet (iv).

15. Überführungsverfahren nach einem der Ansprüche 9 bis 14, **dadurch gekennzeichnet, dass** das weitere Verschwenken (C, D) ein drittes Verschwenken (C) des ersten Vorsatzsegmentes (1) relativ zum Überführungselement (5) um die Überführungssegmentschwenkachse (ÜSA) und ein viertes Verschwenken (D) des Überführungselementes (5) relativ zur Rahmenvorrichtung (12) um die Überführungsrahmenschwenkachse (ÜRA) umfasst.

16. Überführungsverfahren nach einem der Ansprüche 9 bis 15, **dadurch gekennzeichnet, dass** das dritte Verschwenken (C) beginnt (iii), insbesondere endet (iv), bevor oder während das vierte Verschwenken (D) beginnt (iv).

17. Überführungsverfahren nach einem der Ansprüche 9 bis 16, **dadurch gekennzeichnet, dass** das zweite Verschwenken (B), das dritte Verschwenken (C) und/oder das vierte Verschwenken (D) beginnen (ii, iii, iv), insbesondere enden (iii, iv, vi), bevor das erste Verschwenken (A) endet (v).

18. Feldhäckslersystem umfassend den Feldhäcksler (80), aufweisend ein Fahrwerk mit mehreren an die Aufstandsebene (AE) angrenzenden Fahrelementen (82), eine Einzugseinrichtung (84), ein Häckselaggregat und einen Auswurfkrümmer (86), und einen Erntevorsatz (10) nach einem der Ansprüche 1 bis 8, der mittels der Rahmenvorrichtung (12) derart mit dem Feldhäcksler (80) gekoppelt ist, dass die Einzugseinrichtung (84) im Betrieb Maispflanzen aus dem Einzugsbereich (14) zumindest anteilig entgegen der Fahrtrichtung (FR) einzieht.

19. Feldhäckslersystem nach Anspruch 18, **gekennzeichnet durch** eine Ausbildung zur Ausführung des Überführungsverfahrens gemäß einem der Ansprüche 9 bis 17.
